**Europäisches Patentamt**

**European Patent Office**

**Office européen des brevets**

(19)

(11) Veröffentlichungsnummer: **0 009 169
B1**

(12)

# EUROPÄISCHE PATENTSCHRIFT

(45) Veröffentlichungstag der Patentschrift:
02.09.81

(21) Anmeldenummer: 79103283.2

(22) Anmeldetag: 05.09.79

(51) Int. Cl.³: **C 08 F 222/06**, C 08 F 210/14,
C 08 F 2/20 // (C08F222/06,
210/14),(C08F210/14, 222/06)

(54) Verfahren zur Herstellung von Copolymerisaten aus Maleinsäureanhydrid und Alkenen.

(30) Priorität: 18.09.78 DE 2840501

(43) Veröffentlichungstag der Anmeldung:
02.04.80 Patentblatt 80/7

(45) Bekanntmachung des Hinweises auf die Patenterteilung:
02.09.81 Patentblatt 81/35

(84) Benannte Vertragsstaaten:
AT BE CH DE FR GB IT NL SE

(56) Entgegenhaltungen:
FR-A-1 559 968
FR-A-2 297 866
US-A-2 886 552
DIE ANGEWANDTE MAKROMOLEKULARE
CHEMIE, Band 69, Mai 1978, Seiten 141—156
G. SACKMANN et al. »Makromolekulare Dispergatoren für die Copolymerisation von Maleinsäureanhydrid mit 1-Olefinen und Vinylaromaten in Suspension«

(73) Patentinhaber: BASF Aktiengesellschaft,
Carl-Bosch-Strasse 38, D-6700 Ludwigshafen (DE)

(72) Erfinder: Denzinger, Walter, Wormser Landstrasse 65,
D-6720 Speyer (DE)
Erfinder: Cordes, Claus, Dr., Dipl.-Chem.,
Halbergstrasse 13, D-6719 Weisenheim (DE)

Verfahren zur Herstellung von Copolymerisaten aus Maleinsäureanhydrid und Alkenen

Die Erfindung betrifft ein einfaches Verfahren zur Herstellung von Copolymerisaten des Maleinsäureanhydrid mit Alkenen mit 6 bis 10 Atomen durch radikalisch initiierte Suspensionspolymerisation in Gegenwart von speziellen Dispergatoren.

Es ist bekannt, Copolymerisate des Maleinsäureanhydrid mit 1-Alkenen (Olefinen) durch Block-, Lösungs-, Fällungs- und Suspensionspolymerisation mit radikalischen Initiatoren herzustellen. So lehrt die US-A-2 378 629 die Herstellung von Copolymeren des Maleinsäureanhydrids mit 1-Alkenen, gegebenenfalls auch mit einem 1-Alkenüberschuß durch Polymerisation im Block oder auch in Lösung. Weiter ist aus der US-A-2 430 313 bekannt, Copolymere aus Maleinsäureanhydrid und 1-Alkenen durch Fällungspolymerisation in einem inerten Lösungsmittel herzustellen. In der US-A-3 729 451 wird die Suspensionspolymerisation von 1-Olefinen mit 4 bis 14 C-Atomen und Maleinsäureanhydrid in überschüssig eingesetztem 1-Olefin in Gegenwart von Copolymerisaten aus Maleinsäureanhydrid und 1-Olefinen mit 14 bis 18 C-Atomen als Dispergatoren beschrieben. Schließlich ist aus der DE-A-2 501 123 bekannt, Copolymerisate aus 1-Olefinen mit 2 bis 8 C-Atomen und Maleinsäureanhydrid durch Suspensionspolymerisation in überschüssigem 1-Olefin oder aus 1-Olefin und einem gegenüber den Monomeren inerten Lösungsmittel, das das 1-Olefin, nicht aber das Maleinsäureanhydrid löst, und speziellen Dispergatoren, wie den Monoestern oder Monoamiden der Copolymeren mit höheren Alkoholen oder höheren Aminen, herzustellen.

Die genannten Verfahren zeigen einige Nachteile. Bei der Polymerisation nach US-A-2 430 313 unter den Bedingungen einer Fällungspolymerisation fallen die Polymerisate in größeren Klumpen an. Gemäß der US-A-3 729 451 wird dieser Nachteil der Klumpenbildung durch Mitverwendung von Copolymerisaten aus Maleinsäureanhydrid und 1-Olefinen mit 14 bis 18 C-Atomen verhindert. Die Copolymerisate fallen in Form von regellos geformten Teilchen von ca. 20 bis 500 µm Durchmesser an, die für viele Verwendungszwecke dann trotzdem noch gemahlen werden müssen. Nach der Lehre der DE-OS 25 01 123 fallen die Polymerisate zwar in Form von kugelförmigen Teilchen mit einer engen Verteilung von 10 bis 30 µm an. Für einige Anwendungszwecke ist eine derartige Korngröße ausreichend, jedoch zur Neutralisation der Pulver mit Alkali und anschließender Überführung in wäßrige Lösungen sowie zum Lösen generell sind diese Korngrößen noch zu grob.

Aus »Die Angewandte Makromolekulare Chemie« 69 (1978), Seite 141—156 ist bekannt, daß man sehr feinteilige Copolymerisate aus Maleinsäure und Diisobutylen durch Suspensionscopolymerisation in überschüssigem Diisobutylen erhalten kann, deren Teilchengröße unter 5 µm liegen können, wenn man den Polymerisationsansätzen die aus der DE-OS 2 501 123 bekannten Dispergatoren in Prozentsätzen von bis zu 20 Gewichtsprozent und mehr zusetzt (s. Seite 152, Absatz 3 und Seite 153, Abbildung 3 loc. cit.). Setzt man jedoch 5 Gewichtsprozent oder weniger an Dispergator zu, so erhält man nach dieser Literaturstelle Teilchengrößen, die breit gestreut sind und zwischen 1,5 und 50 µm liegen können.

Der Nachteil dieser Arbeitsweise liegt neben dem größeren Verbrauch an Dispergator darin, daß die erhaltenen Polymerisatteilchen einen heterogenen Aufbau besitzen — sie bestehen aus Maleinsäureanhydrid/Diisobutylen-Copolymeren und bis zu 20 Gewichtsprozent und mehr aus Dispergator.

Das Ziel der Erfindung bestand darin, Copolymerisate aus Maleinsäureanhydrid und Alkenen mit 6 bis 10 C-Atomen mit möglichst einheitlichen Teilchengrößen herzustellen, deren Durchmesser unter 10 µm liegt, und dabei Dispergatoren zu finden, die in möglichst geringen Mengen genügend wirksam sind.

Dieses Ziel wurde überraschenderweise mit einer Suspensionspolymerisation in Gegenwart radikalischer Initiatoren und speziellen Dispergatoren erreicht, wie sie in den Patentansprüchen definiert ist.

Dieses Verfahren liefert hochkonzentrierte Suspensionen von Copolymerisaten, die aus kugelförmigen Teilchen mit einem Durchmesser von 0,5 bis 10 µm, vorzugsweise zwischen 1 und 6 µm bestehen.

Die Polymerisate lassen sich in einfacher Weise vom überschüssigen Olefin abfiltrieren und können dann in üblichen Kontakttrocknern (z. B. Schaufeltrocknern) getrocknet werden. Das überschüssige Olefin kann dann erneut verwendet werden.

Ausgangsmonomere für das erfindungsgemäße Verfahren sind außer Maleinsäureanhydrid $C_6$- bis $C_{10}$-Olefine. Diese können 1-Olefine oder Gemische aus 1- und 2-Olefinen sein, und es zeigen beispielsweise Hexen-1, Octen-1, Decen-1, Gemische mit den jeweiligen 2-Olefinen und vor allem technisches Diisobutylen, das eine Mischung aus 2,4,4'-Trimethylpenten-1 und 2,4,4'-Trimethylpenten-2 darstellt, genannt.

An sich copolymerisieren Maleinsäureanhydrid und Olefin bzw. Olefingemisch in äquimolaren Verhältnissen. Für die Suspensionpolymerisation wird jedoch das — der Einfachheit halber so genannte — Alken in einem solchen Überschuß angewandt, daß nach der Polymerisation der Feststoffgehalt der Suspension 20 bis 75%, vorzugsweise 35 bis 60% — jeweils auf das Gewicht der Suspension bezogen — beträgt.

Der erfindungsgemäße Dispergator — im folgenden auch »Schutzkolloid« genannt — wird — bezogen auf das Gewicht der Monomeren — in Mengen von 0,01 bis 5%, vorzugsweise 0,1 bis 2%, eingesetzt. Es handelt sich um Alkylvinyl-äther mit 1 bis 20 C-Atomen pro Alkylkette. Sie sollen vorzugsweise K-Werte von 20 bis 100, speziell von 40 bis 80, gemessen in 1%iger Lösung in Cyclohexanon bei 25°C, aufweisen.

Als spezielle Vertreter seien Polymethyl-, -äthyl-, -n-butyl-, -tert.-butyl-, -dodecyl- und -octadecylvinyläther genannt, von denen Polyäthyl-, -n-butyl-, -tert.-butyl- und -octadecylvinyläther von besonderem Interesse sind.

Die Copolymerisation folgt dem Schema einer üblichen radikalisch initiierten Suspensionspolymerisation.

Als Radikalbildner kommen übliche organi-sche Initiatoren wie Dialkylperoxide, Alkylhydro-peroxide, Perester, Diacylperoxide, Ketonper-oxide und Azoverbindungen in Betracht. Beispielsweise seien genannt: Di-tert.-Butylperoxid, Dicumylperoxid, tert.-Butylhydroperoxid, Cumolhydroperoxid, tert.-Butylperpivalat, tert.-Butylperoctoat, tert.-Butylperbenzoat, Lauroyl-peroxid, Benzoylperoxid, Acetylcyclohexansul-fonylperoxid, Isopropylpercarbonat, Methyl-äthylketonperoxid, Acetylacetonperoxid, Azodi-isobuttersäuredinitril, Azodicarbonimid, Azodi-carbonsäuremethylester.

Die in Betracht kommende Initiatormenge liegt üblicherweise zwischen 0,01 und 6%, bevorzugt 0,5 bis 4%, bezogen auf das entstehende Copolymerisat aus Maleinsäureanhydrid und Olefin im molaren Verhältnis.

Die Polymerisation kann diskontinuierlich oder kontinuierlich bei Temperaturen von 60 bis 200°C, vorzugsweise 80 bis 150°C und Drücken von 1 bis 40 bar, vorzugsweise 1 bis 20 bar, durchgeführt werden.

Bei der Polymerisation kann auch ohne Beeinflussung der Teilchengröße in Gegenwart von üblichen die Molekülgröße beeinflussenden Verbindungen, wie regelnden Stoffen, wie beispielsweise Dodecylmercaptan, Thiophenol, Butyraldehyd, Cyclohexen sowie Verbindungen zur Kettenverlängerung mit 2 oder mehr polymerisierbaren Gruppen im Molekül wie z.B. Butandioldivinyläther, Butandioldiacrylat, Vinyl-acrylat, Divinylbenzol, Divinyldioxan, Pentaery-thrittriallyläther, Polyallylsucrose gearbeitet werden. Die in Betracht kommende Menge an regelnder oder kettenverlängernder Verbindung liegt zwischen 0,01 und 5%, vorzugsweise 0,1 bis 2%, berechnet auf das entstehende molare Copolymere aus Maleinsäureanhydrid und Olefin.

Zur Durchführung der Polymerisation sind die üblichen Rührapparaturen geeignet, wobei Rührkessel mit Blatt- oder Impellerrührer beson-ders geeignet sind. Die Rührgeschwindigkeit ist so zu wählen, daß das olefinunlösliche Maleinsäureanhydrid im Olefin feinst suspendiert ist.

Die geschilderten Maßnahmen zur Copolymerisation führen in einer Stufe zum Erfolg, wenn als Ausgangsmonomere 1-Alkene eingesetzt werden. Falls 1- und 2-Alkengemische eingesetzt werden, wie Diisobutylen, so ist es zweckmäßig, um auch den 2-Alkenanteil bei der Polymerisation vollständig zu erfassen, das Verfahren dahingehend zu modifizieren, daß nach der Polymerisation das übriggebliebene nicht poly-merisierte Alken einem erneuten Polymerisati-onsansatz zugeführt wird, wobei der durch die Polymerisation verbrauchte Anteil durch frisches Olefingemisch ersetzt wird. Dieser Prozeß muß mindestens 3mal, vorzugsweise 7mal, wiederholt werden, damit auch der 2-Olefinanteil vollständig in das Polymermolekül eingebaut wird. Die bei den sich wiederholenden Prozessen jeweils anfallenden Polymerisate werden dann vereinigt.

Wenn man z. B. technisches Diisobutylen nur einmal mit Maleinsäureanhydrid copolymerisiert, so erhält man zwar auch befriedigende feinteilige Copolymerisate, die jedoch nahezu nur 2,4,4'-Trimethylpenten-1-Einheiten einpoly-merisiert enthalten, der 2-Olefinanteil geht dann verloren.

Die entstehenden Polymerisatsuspensionen sind je nach Feststoffgehalt dünn bis leicht viskos und bestehen aus kugelförmigen Polyme-risatteilchen von 0,5 bis 10 μm — meistens zwischen 1 und 6 μm — Durchmesser. Die wirtschaftliche Isolierung der Copolymeren kann z. B. zweckmäßig durch Sprühtrocknung erfolgen. Jedoch lassen sich die feinen Teilchen auch problemlos abfiltrieren und dann in üblichen Trocknern wie z. B. Schaufeltrocknern trocknen. Besonders geeignet sind die Polymerisatsuspensionen zur direkten Überführung der Copolymeren in wäßrige Alkali- oder Ammoniumsalzlösungen durch Hydrolyse. Dabei wird die Polymerisatsuspension mit Wasser versetzt, durch Einleiten von Wasserdampf das überschüssige Olefin abdestilliert und anschließend mit wäßrigem Ammoniak und/oder Alkali neutralisiert.

Das abdestillierte Olefin kann nach Phasentrennung vom Wasser abgetrennt und direkt für weitere Polymerisationen, üblicherweise ohne Reinigung wieder eingesetzt werden. Dies ist besonders wichtig, wenn 1- und 2-Olefingemische eingesetzt werden (s. oben).

Die Copolymeren sind weitgehend äquimolar aufgebaut und besitzen K-Werte von 12 bis 100, vorzugsweise 15 bis 50; letztere werden in 1%iger Lösung in Cyclohexanon bei 25°C bestimmt.

Die erfindungsgemäß erhaltenen Copolymerisate können in Form der Anhydride als reaktive Komponenten z. B. für den Lacksektor oder in Form ihrer Verseifungsprodukte (Alkali- und/oder Ammoniumsalze) als Dispergiermittel für Weißpigmente, Papierleimungsmittel, Überzugsmittel für Papier, Holz, Leder u. dgl. Verwendung finden.

Die nun folgenden Beispiele erläutern die Erfindung. Angegebene Teile sind Gewichtsteile. Die K-Werte wurden nach H. Fikentscher, Cellulose-Chemie 13, Seite 58 bis 64 und 71 bis 74 (1932) bestimmt.

## Beispiel 1

In einem 1-l-Rührkolben mit Blattrührer wurden 400 Teile Hexen-1 und 0,6 Teile einer Lösung von Poly-n-butylvinyläther vom K-Wert 50, 80%ig in Benzin vorgelegt, der Ansatz unter Rühren bei 200 Upm bis zum Sieden auf ca. 65°C erhitzt und innerhalb 2 Stunden gleichmäßig 98 Teile geschmolzenes Maleinsäureanhydrid und eine Lösung von 2 Teilen tert.-Butylperpivalat in 25 Teilen Hexen-1 zugefahren. Anschließend wurde noch 2 Stunden am Rückfluß nacherhitzt. Die dünne Suspension bestand aus 2 bis 4 μm großen kugelförmigen Teilchen. Der K-Wert des Polymeren betrug 31. Das Festprodukt wurde durch Eintrocknen auf einer Glasschale bei 50°C im Vakuum isoliert.

## Beispiel 2

In einem 1-l-Rührkolben mit Blattrührer wurden 150 Teile Maleinsäureanhydrid, 355 Teile Octen-1, 0,5 Teile n-Dodecylmercaptan und 2,2 Teile einer Lösung von Polyäthylvinyläther vom K-Wert 50, 70%ig in Toluol unter Rühren bei 200 Upm bis zum Sieden auf ca. 120°C erhitzt und innerhalb von 4 Stunden eine Lösung aus 3,2 Teilen tert.-Butylperoctoat in 30 Teilen Octen-1 gleichmäßig zudosiert. Anschließend wurde noch 1 Stunde beim Sieden nacherhitzt. Die dünne Suspension bestand aus 2 bis 5 μm großen kugelförmigen Teilchen. Der K-Wert des Polymeren betrug 24. Das Festprodukt wurde durch Eintrocknen in einem Rotationsverdampfer isoliert.

## Beispiel 3

In einem 1-l-Rührkolben mit Blattrührer wurden 290 Teile Diisobutylen (Gemisch aus 80% 2,4,4'-Trimethylpenten-1 und 20% 2,4,4'-Trimethylpenten-2), 122,5 Teile Maleinsäureanhydrid und 3,5 Teile einer 70%igen Lösung eines Polyoctodecylvinyläthers vom K-Wert 25 in Diisobutylen eingefüllt, die Mischung dann auf ca. 102°C bis zum Sieden erhitzt und bei einer Rührerdrehzahl von 200 Upm innerhalb 4 Stunden 13 Teile einer Initiatorlösung aus 25 Teilen Diisobutylen und 2,63 Teilen tert.-Butylperoctoat zudosiert. Anschließend wurde der Rest der Initiatorlösung zugesetzt und noch 1 Stunde unter Sieden nacherhitzt. Die dünnflüssige Suspension bestand aus 1 bis 3 μm großen kugelförmigen Teilchen. Durch Versprühen in einem Inertgasverdüsungstrockner wurde das Festprodukt isoliert. Der K-Wert des Polymeren beträgt 34. Dieses Polymerisat enthielt fast ausschließlich 2,4,4'-Trimethylpenten-1-Einheiten.

## Beispiel 4

In einem 2-l-Glasrührautoklav mit Ankerrührer wurden 600 Teile eines Diisobutylengemisches aus 80 Gewichtsprozent 2,4,4'-Trimethylpenten-1 und 20 Gewichtsprozent 2,4,4'-Trimethylpenten-2 und 1,4 Teile einer 70%igen Lösung eines Polyäthylvinyläthers vom K-Wert 50 in Toluol eingefüllt und die Mischung auf 102°C bis zum schwachen Sieden erhitzt. Nun wurden innerhalb 3 Stunden gleichmäßig 196 Teile Maleinsäureanhydrid in flüssiger Form und eine Lösung von 8,4 Teilen tert.-Butylperoktoat in 40 Teilen Diisobutylen zugefahren und anschließend noch 1 Stunde bei 102°C nacherhitzt. Dann wurden der Suspension 600 Teile dest. Wasser zugesetzt und durch Einleiten von Wasserdampf das Diisobutylen so lange abdestilliert bis die Brüdenübergangstemperatur 99°C betrug. Nach Phasentrennung wurde vom Destillat das spezifisch leichtere Diisobutylen abgetrennt und mit Diisobutylengemisch obiger Zusammensetzung für den nächsten Polymerisationsansatz auf 600 Teile aufgefüllt. Bei der anschließend ausgeführten erneuten Polymerisation erhielt man eine Copolymerisatsuspension aus ca. 3–6 μm großen kugelförmigen Teilchen. Der K-Wert des Polymeren betrug 26,5. Das Copolymere enthält nach $^{13}$C-NMR-Analyse 3 Mol-% 2,4,4'-Trimethylpenten-2. Bei 7maligem Wiedereinsatz des Diisobutylengemisches entsprechend der obigen Vorschrift wurden Produkte mit 9–10 Mol-% 2,4,4'-Trimethylpenten-2 erhalten.

## Beispiel 5

Einer gemäß Beispiel 4 erhaltenen Polymerisatsuspension wurden 1000 Teile dest. Wasser beigemischt und durch Einleiten von Wasserdampf bei einer Badtemperatur von ca. 110°C das überschüssige Diisobutylen abgetrieben. Nach Erreichen von 98°C Innentemperatur wurde noch 1/4 Stunde kräftig mit Dampf geblasen. Anschließend wurde der Kessel druckdicht verschlossen, innerhalb 0,5 Stunden 895 Teile 25%iges Ammoniakwasser zugefahren, 1 Stunde bei ca. 100°C nachgerührt und dann der Kesselinhalt abgekühlt. Die ca. 40%ige wäßrige, fast klare und farblose Ammonsalzlösung des Copolymeren kann dann z. B. als Papierleimmittel und für die Beschichtung von Holz eingesetzt werden.

## Beispiel 6

In einem 1-l-Rührkolben mit Blattrührer wurden 450 Teile Decen-1, 98 Teile Maleinsäureanhydrid und 2,4 Teile Polyoctodecylvinyläther vom K-Wert 40 und 1,2 Teile Polymethylvinyläther vom K-Wert 40 eingefüllt und die Mischung auf ca. 150°C bis zum schwachen Sieden erhitzt. Nun wurden innerhalb von 3 Stunden gleichmäßig eine Initiatorlösung von 1,2 Teilen tert.-Butylhydroperoxid und 1,2 Teilen tert.-Butylperoctoat in 25 Teilen Decen-1 zugefahren und anschließend noch 2 Stunden nacherhitzt. Die leicht viskose, aus kugelförmigen Teilchen von 8 bis 10 µm bestehende Suspension wurde in einer flachen Schale bei 80°C im Vakuumtrockenschrank getrocknet. Der K-Wert des Copolymeren betrug 19,5.

**Patentansprüche**

1. Verfahren zur Herstellung von Copolymerisaten aus Maleinsäureanhydrid und $C_6$- bis $C_{10}$-Alkenen durch Suspensionscopolymerisation der genannten Monomeren in Gegenwart von radikalbildenden Initiatoren und Dispergatoren bei erhöhter Temperatur in überschüssigem Alken als Suspensionsmedium, dadurch gekennzeichnet, daß man als Dispergatoren Polyalkylvinyläther mit 1 bis 20 C-Atomen pro Alkylgruppe in Mengen von 0,01 bis 5% — bezogen auf das Gewicht der Monomeren — einsetzt.

2. Verfahren nach Anspruch 1, dadurch gekennzeichnet, daß man als Dispergatoren Polyäthyl-, -tert.-butyl-, -n-butyl- oder -octadecylvinyläther einsetzt.

**Claims**

1. A process for the preparation of copolymers of maleic anhydride and $C_6-C_{10}$-alkenes by suspension copolymerization of the said monomers in the presence of a free radical initiator and a dispersant at an elevated temperature, in excess alkene as the suspension medium, characterized in that a poly (alkyl vinyl ether), where alkyl is of 1 to 20 carbon atoms, is employed as the dispersant in an amount of from 0.01 to 5%, based on the weight of the monomers.

2. A process as claimed in claim 1, characterized in that a polymer of ethyl, tert.-butyl, n-butyl or octadecyl vinyl ether is employed as the dispersant.

**Revendications**

1. Procédé de préparation de copolymères à base d'anhydride maléique et d'alcènes en $C_6$ à $C_{10}$ par copolymérisation en suspension de ces monomères à température accrue en présence d'initiateurs formant des radicaux et de dispersants, de l'alcène en excès servant de milieu de dispersion, caractérisé en ce que l'on emploie comme dispersants des éthers polyalcoyl-vinyliques avec des groupes alcoyle en $C_1$ à $C_{20}$ en des proportions de 0,01 à 5% par rapport au poids des monomères.

2. Procédé suivant la revendication 1, caractérisé en ce que l'on emploie comme dispersants les éthers poly-éthyl-, -tertiobutyl-, -n-butyl- ou -octadécylvinyliques.